Europäisches Patentamt

(19) European Patent Office

Office européen des brevets

(11) Numéro de publication: **0 273 933**
**B1**

(12) **FASCICULE DE BREVET EUROPEEN**

(45) Date de publication du fascicule du brevet: **19.09.90**

(51) Int. Cl.⁵: **B 65 D 77/06**

(21) Numéro de dépôt: **87904060.8**

(22) Date de dépôt: **23.06.87**

(86) Numéro de dépót international:
**PCT/FR87/00241**

(87) Numéro de publication internationale:
**WO 88/00162 14.01.88 Gazette 88/02**

(54) DISPOSITIF POUR LA PERFORATION D'UN EMBALLAGE EN MATIERE SYNTHETIQUE SOUPLE.

(30) Priorité: **02.07.86 FR 8609702**

(43) Date de publication de la demande:
**13.07.88 Bulletin 88/28**

(45) Mention de la délivrance du brevet:
**19.09.90 Bulletin 90/38**

(84) Etats contractants désignés:
**AT BE CH DE GB IT LI LU NL SE**

(56) Documents cités:
**FR-A-2 080 472**
**US-A-3 231 444**
**US-A-4 355 737**
**US-A-4 493 438**

(73) Titulaire: **SOCIETE GENERALE DES EAUX MINERALES DE VITTEL**
**B.P. 43**
**F-88800 Vittel (Vosges) (FR)**

(72) Inventeur: **CAZES, Michel**
**84, rue Jean Bouin**
**F-88800 Vittel (FR)**

(74) Mandataire: **Poupon, Michel**
**3, rue Thiers B.P. 247**
**F-88007 Epinal Cédex (FR)**

Courier Press, Leamington Spa, England.

Description

La présente invention a pour objet un dispositif pour la perforation d'un emballage en matière synthétique souple, du type comportant un ensemble d'obturation et de versage constitué par un fût cylindrique et par un bouchon coopérant avec ledit fût et muni de moyens de découpe et de perforation de la paroi de l'emballage par vissage ou pression pour permettre le versage d'un liquide contenu dans ledit emballage.

Des dispositifs de ce type sont en eux-mêmes connus.

Ils ont par exemple fait l'objet du brevet US 4 440 316.

Ces dispositifs de l'art antérieur donnent entière satisfaction, mais sont encore perfectibles quant à la qualité de la découpe partielle ou totale de la pastille ou de la zone de film à dégager pour obtenir un orifice de versage.

L'invention a pour objet de remédier à ces inconvénients.

Conformément à l'invention, ce résultat est obtenu avec un dispositif pour la perforation d'un emballage en matière synthétique souple, du type comportant un ensemble d'obturation et de versage constitué par un fût cylindrique et par un bouchon coopérant avec ledit fût et muni de moyens de découpe et de perforation de la paroi de l'emballage par vissage ou pression pour permettre le versage d'un liquide contenu dans ledit emballage, caractérisé en ce que le fût comporte un renfort de matière débordant vers l'intérieur par rapport à l'embase du fût, au niveau de la zone à découper, ledit renfort étant venu de matière avec ledit fût.

Grâce à cette structure on évite tous les inconvénients des dispositifs de l'art antérieur, en particulier le risque que la zone à perforer ne se déforme par effet élastique au lieu d'être effectivement découpée.

En effet, la zone qui est généralement déformée par élasticité ou allongement important est attaquée par le dispositif de l'invention selon un angle différent, l'effort appliqué par le moyen de découpe se répartissant et étant supporté non par une ligne de contrainte au cisaillement mais par une surface offrant une plus grande résistance, bien entendu dans les limites compatibles avec un effort manuel à la portée de tout utilisateur.

Le renfort de matière pourra être obtenu de plusieurs manières.

Ainsi par exemple il pourra être venu de fabrication avec le fût de l'ensemble d'obturation.

Cette structure nécessite cependant un contre-appui très spécifique pour la fixation du fût sur la gaine tubulaire formant l'emballage, ce qui pose des problèmes car le fût se présente en général ensemble avec son bouchon. La zone intérieure n'est donc pas accessible.

Selon une variante préférée de mise en oeuvre, le renfort sera réalisé par fluage de matière au niveau de l'embase lors de la fixation du fût sur la gaine, ladite embase comportant de fabrication, avant sa fixation, un bourrelet annulaire sensiblement dans le prolongement vertical du fût et qui flue au moins partiellement vers l'intérieur du fût et perpendiculairement à celui-ci lors de la soudure de l'ensemble d'obturation sur la gaine de film en cours de conformation.

On comprendra mieux l'invention à l'aide de la description faite ci-après, en référence aux dessins schématiques annexés dans lesquels:

les figures 1a et 1b illustrent une première variante de mise en oeuvre de l'invention;

les figures 2a à 2e illustrent une seconde variante préférée de mise en oeuvre de l'invention;

les figures 3a et 3b sont une variante de mise en oeuvre du dispositif des figures 2a à 2e.

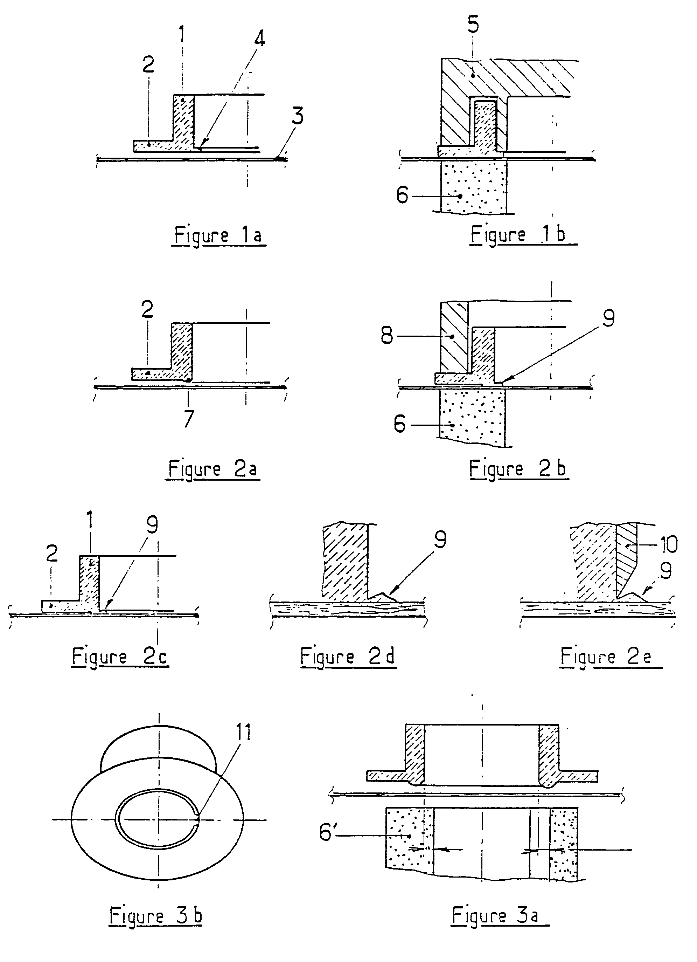

On se référera tout d'abord aux figures 1a et 1b.

L'ensemble d'obturation comporte essentiellement un fût cylindrique (1) se terminant à sa partie inférieure par une embase circulaire (2).

Cet ensemble est destiné à être appliqué par soudure sur une gaine de film (3) au moment de sa conformation, sur un mandrin, en sachets individuels destinés à conditionner des liquides alimentaires ou médicaux.

On a représenté sur cette embase un renfort intérieur (4) venu de fabrication avec le fût, disposé dans le plan de l'embase.

On a illustré à la figure 1b la scudure de cet ensemble sur le film au moyen d'un contre-appui (5) de forme spécifique coopérant avec un élément chauffant (soudure thermique ou par impulsion) ou vibrant (soudure par ultrason) référencé (6).

Le système est retenu sous cette forme lorsque l'on utilise des perforateurs de coût élevé, donc destinés à être livrés de manière unitaire pour une pluralité de sachets, par exemple vendus en chapelets ou autres conditionnements multiples.

Selon un mode préféré de mise en oeuvre de l'invention, représenté aux figures 2a à 2e, on prévoiera, toutes choses égales par ailleurs, que le renfort référencé (4) à la figure 1a sera remplacé par un bourrelet annulaire (7) venu de matière avec le fût de l'ensemble d'obturation.

Pour la soudure, représenté à la figure 2b, on utilise de manière conventionnelle un contre-appui (8) extérieur au fût et l'ensemble de soudure (6). On réalise ainsi un fluage du bourrelet (7) qui se transforme en renfort (9) formant collerette intérieure, comme représenté à la figure 2c.

On a représenté plus fidèlement la structure du renfort (9) à la figure 2d.

On comprend, comme représenté à la figure 2e, que le moyen de découpe (10) solidaire de l'ensemble d'obturation aura un meilleur appui pour découper le renfort (9) au droit du fût que en l'absence d'un tel appui. La coupe sera franche, sans arrachage, ni déchirement.

Selon une variante de mise en oeuvre, l'outil de soudure (6') aura un profil particulier, de manière à ce que le renfort ne soit présent que sur une partie de la périphérie de la zone à découper. On obtient ainsi la structure de la figure 3b dans laquelle une zone (11) conserve la structure sans renfort de l'art antérieur.

De cette manière, la pastille de film découpée reste solidaire de la gaine et ne peut tomber dans le sachet.

## Revendications

1. Dispositif pour la perforation d'un emballage en matière synthétique souple, du type comportant un ensemble d'obturation et de versage constitué par un fût cylindrique et par un bouchon coopérant avec ledit fût et muni de moyens de découpe et de perforation de la paroi de l'emballage par vissage ou pression pour permettre le versage d'un liquide contenu dans ledit emballage, caractérisé en ce que le fût comporte un renfort de matière débordant vers l'intérieur par rapport à l'embase du fût (1), au niveau de la zone à découper, ledit renfort étant venu de matière avec ledit fût.

2. Dispositif selon la revendication 1, caractérisé en ce que le renfort (4) est soudé à la gaine de film par un contre-appui (5) de forme spécifique coopérant avec un élément chauffant.

3. Dispositif selon la revendication 1, caractérisé en ce que le renfort (9) est obtenu par fluage d'un bourrelet annulaire (7), le renfort (9) formant collerette intérieure.

4. Dispositif selon la revendication 3, caractérisé en ce que le renfort n'est réalisé que sur une partie de la périphérie de la pastille à découper, ladite pastille restant solidaire de la gaine après découpe.

## Patentansprüche

1. Vorrichtung zum Perforieren einer weichen Kunststoffverpackung, welche Mittel zum Verschließen und Ausgießen aufweist, die aus einer zylindrischen Tülle und einer zugehörigen Verschlußkappe gebildet sind und mit Mitteln zum Abtrennen und Perforieren der Wand der Verpackung durch Schrauben oder Druck versehen sind, um das Ausgießen einer in der Verpackung enthaltenen Flüssigkeit zu ermöglichen, dadurch gekennzeichnet, daß die Tülle eine in bezug auf die kreisförmige Grundfläche der der Tülle und in Höhe der abzutrennenden Zone flanschartig nach innen ragende Materialverstärkung aufweist, wobei die genannte Verstärkung einstückig mit der genannten Tülle ausgebildet ist.

2. Vorrichtung nach Anspruch 1, dadurch gekennzeichnet, daß die Verstärkung (4) mit der Folienhülle mittels eines speziellen Gegenhalters (5), der mit einem Heizelement zusammenarbeitet, verschweißt ist.

3. Vorrichtung nach Anspruch 1, dadurch gekennzeichnet, daß die Verstärkung (9) durch Verformung eines Ringwulstes (7) erzeugt ist, wodurch die Verstärkung (9) einen inneren Flansch bildet.

4. Vorrichtung nach Anspruch 3, dadurch gekennzeichnet, daß die Verstärkung nur in einem Teilbereich des abzutrennenden Plättchens vorgesehen ist, so daß das Plättchen mit der Hülle nach dem Abtrennen verbunden bleibt.

## Claims

1. A device for perforating a packaging of flexible synthetic material, of the type comprising a stopping and pouring unit consisting of a cylindrical stem and a stopper cooperating with said stem and equipped with means for cutting and perforating the packaging wall by screwing or pressure to allow pouring of a liquid contained in said packaging, characterised in that the stem comprises a reinforcement of material protruding toward the interior relative to the base of the stem (1) in the region of the cutting zone, said reinforcement being in one piece with said stem.

2. A device according to claim 1, characterised in that the reinforcement (4) is welded to the film wrapping by a counter-support (5) of specific shape cooperating with a heating element.

3. A device according to claim 1, characterised in that the reinforcement (9) is obtained by the plastic flow of an annular bead (7), the reinforcement (9) forming an internal flange.

4. A device according to claim 3, characterised in that the reinforcement is produced over only part of the periphery of the patch to be cut, said patch remaining integral with the wrapping after being cut.

Figure 1a

Figure 1 b

Figure 2a

Figure 2 b

Figure 2c

Figure 2 d

Figure 2 e

Figure 3 b

Figure 3a

1